# EUROPÄISCHE PATENTANMELDUNG

(11) **EP 4 837 826 A1**
(43) Veröffentlichungstag der Anmeldung: **11.11.2026**
(21) Anmeldenummer: 26167665.4
(22) Anmeldetag: 25.03.2026
(51) Int. Cl.: B62H 3/12, B62H 3/08

(54) **FAHRRADLIFT MIT TELESKOPIERBAREM AUSZUG**

(30) Priorität: 07.05.2025 EP 25174917
(71) Anmelder: Gerhard Geiger GmbH & Co. KG, 74321 Bietigheim-Bissingen (DE)
(72) Erfinder: Hoffmann, Reiner, 74343 Sachsenheim (DE)
(74) Vertreter: Jeck, Jonathan

(57) **Zusammenfassung**

Die vorliegende Erfindung betrifft einen Fahrradlift zum Parken mindestens eines Fahrrades. Der Fahrradlift umfasst einen statischen Teil zur Befestigung an einer Wand und/oder Decke, einen beweglichen Teil mit einer Fahrradhalterung zum Positionieren des Fahrrades, und eine Hubeinheit zum Anheben der Fahrradhalterung mit dem Fahrrad. Der bewegliche Teil ist innerhalb oder um den statischen Teil geführt gelagert. Die Fahrradhalterung ist bevorzugt vor dem beweglichen Teil angeordnet und über eine Halterung am beweglichen Teil befestigt, die eine Verlagerung nach oben hin über den unteren Rand des statischen Te den unteren Rand des statischen Teils entlang des statischen Teils des Gehäuses ermöglicht. Die Fahrradhalterung (30) umfasst eine horizontale Befestigungsstrebe (33) und ein an der horizontalen Befestigungsstrebe (33) angeordnetes Radablagenpaar mit zwei jeweils einem Fahrradreifen eines zum Umgang mit dem Fahrradlift vorgesehenen Fahrrads zugeordneten Radablagen (31). Am beweglichen Teil (20) ist ein Halteelement (40) zur zusätzlichen Sicherung des Fahrrads auf dem Fahrradlift ausgebildet.

## Beschreibung

Die vorliegende Erfindung bezieht sich auf Hebevorrichtungen für Fahrräder, und insbesondere auf einen Fahrradlift mit einem teleskopierbaren Auszug zur platzsparenden vertikalen Lagerung von Fahrrädern gemäß Anspruch 1.

Fahrradlifte und ähnliche Hebevorrichtungen für Zweiräder werden häufig in Garagen, Kellern oder anderen Lagerräumen eingesetzt, um Platz zu sparen und Fahrräder sicher aufzubewahren. Solche Systeme ermöglichen es, Fahrräder vertikal anzuheben und unter der Decke oder in der Höhe zu lagern, wodurch wertvoller Bodenraum frei bleibt.

Herkömmliche Fahrradlifte bestehen typischerweise aus einer festen Halterung, die an der Wand oder Decke montiert wird, sowie einem beweglichen Element zum Anheben und Absenken des Fahrrads.

Durch AT 514139 A2 ist ein Fahrradlift bekannt bestehend aus einem statischen Teil in Form eines wandbefestigbaren Unterkastens und einem gegenüber diesem nach oben verschiebbaren Oberkasten als beweglichen Teil, der teleskopisch mit dem statischen Teil verbunden ist. An dem beweglichen Teil ist eine Fahrradhalterung befestigt. Ein Antriebssystem umfasst mindestens ein Zugmittel sowie ein Führungssystem für das Zugmittel, welches Führungssystem das Zugmittel durch den statischen Teil ohne Überkreuzung führt. Der bewegliche Teil ist konfiguriert, sich vertikal über eine obere Kante des statischen Teils hinaus zu verlagern. Ein zum Umgang mit dem Fahrradlift vorgesehenes Fahrrad wird mit der Nabe eines seiner Räder, vorteilhaft seines Vorderrads, an der Fahrradhalterung eingehängt. Das eingehängte Rad wird angehoben, sobald das bewegliche Teil des Fahrradlifts nach oben fährt. Das verbleibende freie Rad rollt zunächst am Boden gegen die Wand, entlang welcher es sich beim weiteren Anheben weiterhin abstützt, während das Fahrrad schließlich auch mit dem verbleibenden freien Rad vom Boden abgehoben wird. Muss das Fahrrad angehoben werden, um es mit der Nabe eines seiner Räder am Fahrradlift einzuhängen, stellt dies insbesondere bei einem schweren Fahrrad eine erhebliche Kraftanstrengung dar. Ferner ist eine mit dem Umfang seiner Reifen gegen die Wand abgestützte Lagerung eines Fahrrads nicht geeignet, Bodenfläche beispielsweise zum Abstellen eines weiteren Fahrrads freizugeben.

Ein Problem bei vielen existierenden Fahrradliften ist der begrenzte Hubweg. Dies schränkt die Flexibilität bei der Montage und Nutzung ein, da der Lift oft relativ tief angebracht werden muss, um das Fahrrad bis auf Bodenniveau absenken zu können. Gleichzeitig begrenzt dies die maximale Hubhöhe, was die effektive Raumnutzung limitiert.

Eine weitere Herausforderung stellt die Stabilität dar, insbesondere bei schweren E-Bikes oder wenn mehrere Fahrräder gleichzeitig angehoben werden sollen. Viele Systeme neigen bei hoher Last zum Verkanten oder Schwingen, was die Bedienung erschwert und ein Sicherheitsrisiko darstellen kann.

Zudem sind zahlreiche am Markt erhältliche Fahrradlifte in ihrer Konstruktion relativ komplex. Dies kann zu höheren Kosten, erhöhtem Wartungsaufwand und einer größeren Anfälligkeit für Störungen führen. Einfachere und robustere Lösungen wären hier wünschenswert.

Es wurde erkannt, dass eine Vorrichtung benötigt wird, die eine oder mehrere dieser Probleme überwindet.

Diese Zusammenfassung dient dazu, eine Auswahl von erfindungsgemäßen Konzepten in vereinfachter Form vorzustellen, die im Folgenden in der detaillierten Beschreibung näher erläutert werden.

Vorteilhaft wird ein Fahrradlift (10) bereitgestellt. Der Fahrradlift (10) umfasst: einen statischen Teil (60), der zur Befestigung an einer Wand oder Decke konfiguriert ist; einen beweglichen Teil (20), der teleskopisch mit dem statischen Teil (60) verbunden ist; eine Fahrradhalterung (30), die am beweglichen Teil (20) befestigt ist; ein Antriebssystem, das umfasst: mindestens ein Zugmittel (61), bevorzugt ein Führungssystem für das Zugmittel (61), das konfiguriert ist, das Zugmittel (61) durch den statischen Teil (60) bevorzugt ohne Überkreuzung zu führen; wobei der bewegliche Teil (20) vertikal sowohl über eine obere Kante als auch eine untere Kannte des statischen Teils (60) hinaus verlagerbar konfiguriert ist.

Diese Konfiguration ermöglicht eine kompakte Bauweise des Fahrradlifts bei gleichzeitig großem vertikalen Verfahrweg. Durch die teleskopische Verbindung und die Möglichkeit, den beweglichen Teil über die Grenzen des statischen Teils hinaus zu bewegen, kann der Lift effizient Platz sparen und dennoch eine beträchtliche Hubhöhe erreichen.

Die Fahrradhalterung (30) umfasst mindestens ein Radablagenpaar aus zwei jeweils einem Fahrradreifen zugeordneten Radablagen (31).

Jede Radablage bietet eine stabile Auflagefläche für einen Fahrradreifen des Fahrrads und erleichtert das sichere Positionieren des Fahrrads auf dem Lift.

Das Radablagenpaar aus zwei jeweils einem Fahrradreifen zugeordneten Radablagen (31) erlaubt, ein Fahrrad auf seinen Rädern stehend mit deren momentan dem Boden zugewandten Partie ihres Reifenumfangs auf die Fahrradhalterung zu stellen. Ein zum Umgang mit dem Fahrradlift vorgesehenes Fahrrad verbleibt dadurch auch während des Umgangs mit dem Fahrradlift in einem zur Nutzung vorgesehenem Fahrzustand auf seinen beiden Rädern stehend.

Hierdurch ist außerdem sichergestellt, dass in angehobenem Zustand eines zum Umgang mit dem Fahrradlift vorgesehenen Fahrrads die unterhalb des Fahrrads befindliche Bodenfläche freigegeben wird.

Wenn sich der Fahrradlift in der oberen Endposition befindet, wobei der beweglichen Teil (20) über die obere Kante des statischen Teils (60) verlagert ist, ist der Bereich darunter frei. Dadurch kann ein weiteres Fahrrad oder andere Dinge auf der nunmehr freigewordenen Bodenfläche abgestellt werden. Je nach Platzierung in einer Garage, stirnseitig oder seitlich, kann ein Auto mit der Motorhaube darunter oder seitlich näher an die Wand parkiert werden.

Dies ist beim vorbekannten Stand der Technik, bei dem das Fahrrad mit seinen Rädern gegen die Wand stehend Vorderrad über Hinterrad angehoben wird, nicht gewährleistet.

Die Fahrradhalterung (30) kann vorteilhaft je Radablage (31) eine seitliche Radstütze (32) umfassen.

Die seitliche Radstütze verhindert ein seitliches Abrutschen des Rads des Fahrrads und erhöht somit die Stabilität und Sicherheit während des Hebevorgangs.

Die Fahrradhalterung (30) umfasst eine horizontale Befestigungsstrebe (33), an deren distalen Enden einander gegenüberliegend die Radablagen (31) des Radablagenpaars in Bezug auf eine Längserstreckung der Befestigungsstrebe (33) längsverstellbar angeordnet sind.

Die längsverstellbare Anordnung der Radablagen (31) des Radablagenpaars entlang der Längserstreckung der Befestigungsstrebe (33) ist vorteilhaft stufenlos. So können die Radablagen (31) sowohl gemeinsam zum Ausbalancieren des Schwerpunkts eines zum Umgang mit dem Fahrradlift vorgesehenen Fahrrads in Bezug auf die Mitte der horizontalen Befestigungsstrebe (33), als auch unabhängig voneinander zur Anpassung des Achsabstands eines zum Umgang mit dem Fahrradlift vorgesehenen Fahrrads exakt und an beliebigen hierzu erforderlichen Stellen entlang der Längserstreckung der Befestigungsstrebe (33) positioniert werden.

Die horizontale Befestigungsstrebe dient als Aufnahme für die Radablage (31) und als Verbindung zum beweglichen Teil und trägt zu einer gleichmäßigen Lastverteilung bei.

Der Fahrradlift (10) umfasst darüber hinaus ein Halteelement (40) am beweglichen Teil (20), welches zur zusätzlichen Sicherung eines Fahrrads auf dem Fahrradlift ausgebildet ist.

Das Halteelement (40) umfasst einen auf verschiedene Längen einstellbaren und um 360° um eine Längsachse drehbaren Haken. Vorteilhaft umfasst der Haken ein erstes drehbar und schwenkbar am beweglichen Teil (20) angeordnetes Teil mit einer Längsachse und ein gegenüber diesem entlang dessen Längsachse längsverstellbar angeordnetes zweites Teil, welches an dessen dem ersten Teil abgewandten Ende hakenförmig zur Hintergreifung einer Rahmenpartie eines zum Umgang mit dem Fahrradlift vorgesehenen Fahrrads ausgebildet ist.

Der durch das Halteelement gebildete oder von diesem ganz oder teilweise umfasste oder das Halteelement ganz oder teilweise umfassende Haken kann auf verschiedene Längen eingestellt werden und um 360° um dessen Längsachse gedreht werden, so dass je nach Fahrrad die geeignete Position zum Einhaken genutzt werden kann. Dies ermöglicht auch das Einhaken von und somit den Umgang des Fahrradlifts mit Tiefeinsteiger-Fahrrädern (z.B. Damen-Fahrrädern).

Das zusätzliche Halteelement erhöht die Sicherheit, indem es eine weitere Befestigungsmöglichkeit für das Fahrrad bietet und somit das Risiko eines unbeabsichtigten Lösens minimiert. Bevorzugt ist das Halteelement oberhalb der Fahrradhalterung am beweglichen Teil angeordnet. Besonders bevorzugt handelt es sich um ein beweglich gelagerten haken, der Ausgebildet ist, insbesondere am Rahmen eines Fahrrads auf dem Fahrradlift haltend einzugreifen.

Das Zugmittel (61) kann eine Kette sein.

Die Verwendung einer Kette als Zugmittel bietet den Vorteil einer hohen Belastbarkeit bei gleichzeitig geringer Dehnung, was zu einer präzisen Positionierung und langlebigen Funktion des Lifts beiträgt. Insbesondere im Hinblick auf den teleskopierbar verlagerbaren beweglichen Teil, welche bevorzugt zwei teleskopierbare Auszüge aufweisen kann, kann eine gleichmäßige und gleichbleibende Länge des Zugmittels zuträglich sein.

Das Antriebssystem kann einen Antrieb (62) umfassen.

Ein dedizierter Antrieb ermöglicht eine kontrollierte und kraftvolle Bewegung des Lifts, was besonders bei schweren Fahrrädern oder E-Bikes von Vorteil ist.

Das Antriebssystem kann weiter ein Umlenkrad (63) umfassen, welches angetrieben das Zugmittel, insbesondere die Kette beweglich verlagert.

Das Umlenkrad optimiert die Kraftübertragung vom Antrieb auf das Zugmittel und ermöglicht eine gleichmäßige und effiziente Bewegung des Lifts.

Das Antriebssystem kann weiter ein Übertragungselement (64) umfassen, welches das Umlenkrad mit dem Antrieb verbindet. das Übertragungselement kann beispielsweise eine Antriebswelle oder ein Äquivalentes Bauteil umfassen.

Das Übertragungselement gewährleistet eine effiziente und zuverlässige Kraftübertragung vom Antrieb zum Umlenkrad und damit zum Zugmittel.

Das Antriebssystem kann weiter ein Getriebe (67) umfassen.

Ein Getriebe ermöglicht eine optimale Anpassung der Antriebskraft und -geschwindigkeit an die Erfordernisse des Lifts, was zu einem energieeffizienten und präzisen Betrieb führt.

Das Führungssystem kann ein Zugmittelführungsrohr (65) umfassen.

Das Zugmittelführungsrohr sorgt für eine saubere und sichere Führung des Zugmittels, insbesondere des Endes das entfernt (distal) vom beweglichen Teil ist, verhindert Verschmutzungen und erhöht die Betriebssicherheit des Lifts.

Der bewegliche Teil (20) kann einen teleskopierbaren Auszug (66-66") umfassen.

Der teleskopierbare Auszug ermöglicht eine kompakte Bauweise im eingefahrenen Zustand bei gleichzeitig großem Verfahrweg, insbesondere in zwei Richtungen, was die Flexibilität und Raumeffizienz des Lifts erhöht.

Der statische Teil (60) kann eine obere Öffnung (68) für den teleskopierbaren Auszug (66-66") aufweisen, durch welchen der Auszug nach oben aus dem statischen Teil heraus verfahrbar ist. Eine untere Öffnung der selben Funktion ist ebenfalls vorgesehen.

Diese Konfiguration ermöglicht es, den Verfahrweg des Lifts über die Grenzen des statischen Teils in zwei Richtungen hinaus zu erweitern, was eine maximale Ausnutzung des verfügbaren vertikalen Raums in zwei Richtungen erlaubt.

Der bewegliche Teil (20) kann mindestens eine Halterung für Zugmittel (21) umfassen, über welche das Zugmittel mit dem beweglichen Teil fest und die Zugkraft des Antriebs auf den beweglichen Teil übertragend verbunden ist.

Diese feste Verbindung zwischen Zugmittel und beweglichem Teil gewährleistet eine direkte und effiziente Kraftübertragung, was zu einer präzisen Steuerung und stabilen Bewegung des Lifts führt.

Der Fahrradlift (10) kann konfiguriert sein, mindestens zwei Fahrräder gleichzeitig aufzunehmen und zu heben.

Die Fähigkeit, mehrere Fahrräder gleichzeitig zu heben, erhöht die Effizienz und Nützlichkeit des Lifts, insbesondere in Haushalten oder Einrichtungen mit mehreren Fahrrädern.

Vorteilhaft kann eine Hinderniserkennung sowohl in Aufwärts-, als auch in Abwärtsrichtung vorgesehen sein.

Nicht einschränkende und nicht erschöpfende Beispiele werden anhand der folgenden Abbildungen beschrieben. Es zeigen in schematischer Darstellung:
- FIG. 1: eine perspektivische Ansicht einer Fahrradhebevorrichtung mit nach unten ausgefahrenem, beweglichem Teil.
- FIG. 2: eine Rückansicht der Fahrradhebevorrichtung mit nach unten ausgefahrenem, beweglichem Teil.
- FIG. 3: eine Seitenansicht einer Fahrradhebevorrichtung mit nach unten ausgefahrenem, beweglichem Teil.
- FIG. 4: die perspektivische Ansicht nach Fig. 1 ohne Abdeckungen an dem statischen und dem beweglichen Teil.
- FIG. 5: eine Detailansicht des statischen Teils von vorn ohne Abdeckung mit Blick auf die Mechanik.
- FIG. 6: einen Ausschnitt der Detail ansicht nach Fig. 5 mit Blick auf die Antriebeinheit.
- FIG. 7: eine perspektivische Vorderansicht des Statischen Teils von Oben mit Sicht auf die oberen Öffnungen
- FIG. 8: die Fahrradhebevorrichtung mit vollständig eingefahrenem, beweglichem Teil im statischen Teil.
- FIG. 9: eine perspektivische Frontansicht mit dem beweglichen Teil (ausgeblendet) an den teleskopiebaren Anzügen am oberen Ende aus dem statischen Teil herausragend.
- FIG. 10: die perspektivische Frontansicht nach Fig. 9 herausgezoomt ohne Abdeckung am statischen Teil.
- FIG. 11: einen zum Umgang mit einem Fahrrad an einer Wand montierten Fahrradlift ohne Abdeckung am statischen Teil in abgesenktem, zur Aufnahme oder zur Verwendung des Fahrrads vorgesehenem Zustand in perspektivischer Ansicht.
- FIG. 12: den Fahrradlift aus FIG. 11 mit Abdeckung in perspektivischer Ansicht.
- FIG. 13: den Fahrradlift aus FIG. 12 in perspektivischer Ansicht ohne das zum Umgang vorgesehene Fahrrad.
- FIG. 14: einen zum Umgang mit einem Fahrrad an einer Wand montierten Fahrradlift in angehobenem, zur Verstauung des Fahrrads vorgesehenem Zustand in perspektivischer Ansicht.
- FIG. 15: den Fahrradlift aus FIG. 14 in perspektivischer Ansicht ohne das zum Umgang vorgesehene Fahrrad.
- FIG. 16: ein Radablagenpaar bestehend aus zwei jeweils einem Fahrradreifen, bevorzugt dem Außenumfang, besonders bevorzugt einer Außenumfangpartie jeweils eines Fahrradreifens, zugeordneten, entlang einer Befestigungsstrebe (33) gesehen einander gegenüberliegend angeordneten Radablagen (31) einer Fahrradhalterung (30) eines Fahrradlifts in perspektivischer Ansicht, wobei die Radablagen (31) zur Anpassung an

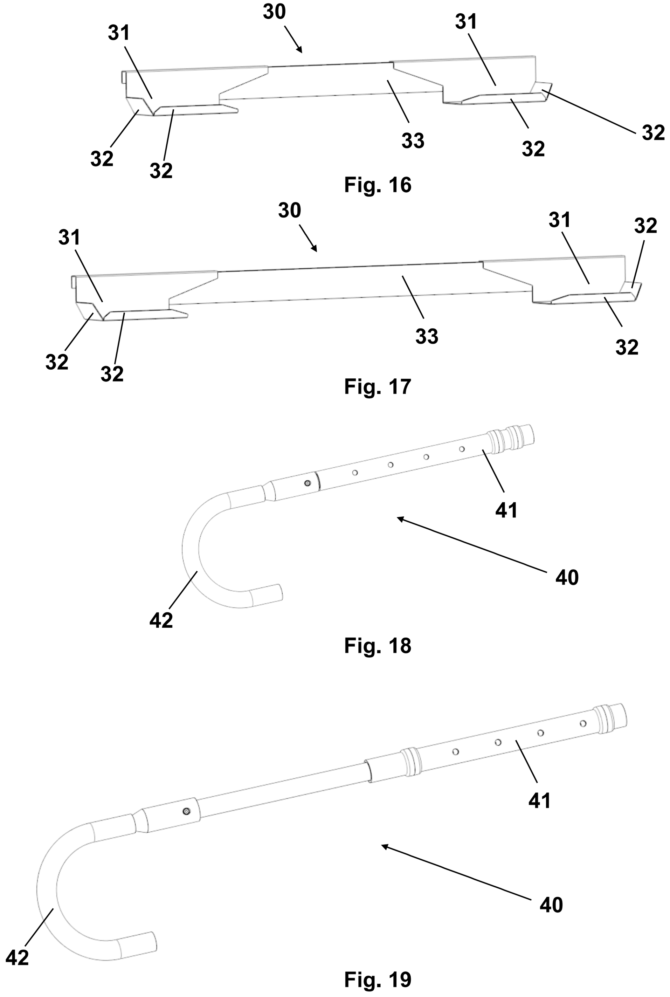

- FIG. 17: einen kurzen Radstand eines zum Umgang mit dem Fahrradlift vorgesehenen Fahrrads in einem eng beieinander liegenden Abstand entlang der Befestigungsstrebe (33) angeordnet sind. ein Radablagenpaar bestehend aus zwei jeweils einem Fahrradreifen, bevorzugt dem Außenumfang, besonders bevorzugt einer Außenumfangpartie jeweils eines Fahrradreifens, zugeordneten, entlang einer Befestigungsstrebe (33) gesehen einander gegenüberliegend angeordneten Radablagen (31) einer Fahrradhalterung (30) eines Fahrradlifts in perspektivischer Ansicht, wobei die Radablagen (31) zur Anpassung an einen langen Radstand eines zum Umgang mit dem Fahrradlift vorgesehenen Fahrrads in einem weit voneinander liegenden Abstand entlang der Befestigungsstrebe (33) angeordnet sind.
- FIG. 18: ein Halteelement (40) umfassend einen auf verschiedene Längen einstellbaren Haken in kurzer Einstellung in einer perspektivischen Ansicht.
- FIG. 19: ein Halteelement (40) umfassend einen auf verschiedene Längen einstellbaren Haken in langer Einstellung in einer perspektivischen Ansicht.

In den Abbildungen werden durchgehend gemeinsame Bezugsziffern verwendet, um ähnliche oder gleiche oder gleichwirkende Merkmale zu kennzeichnen.

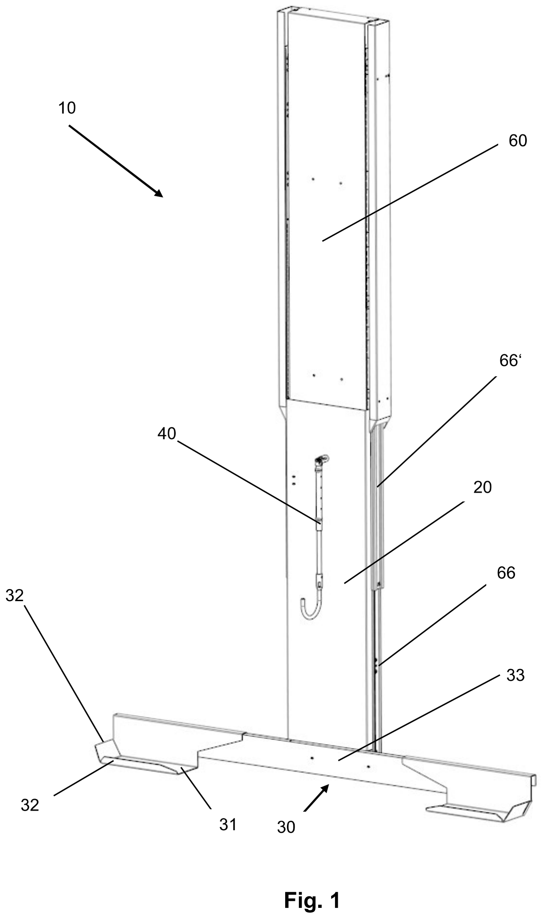

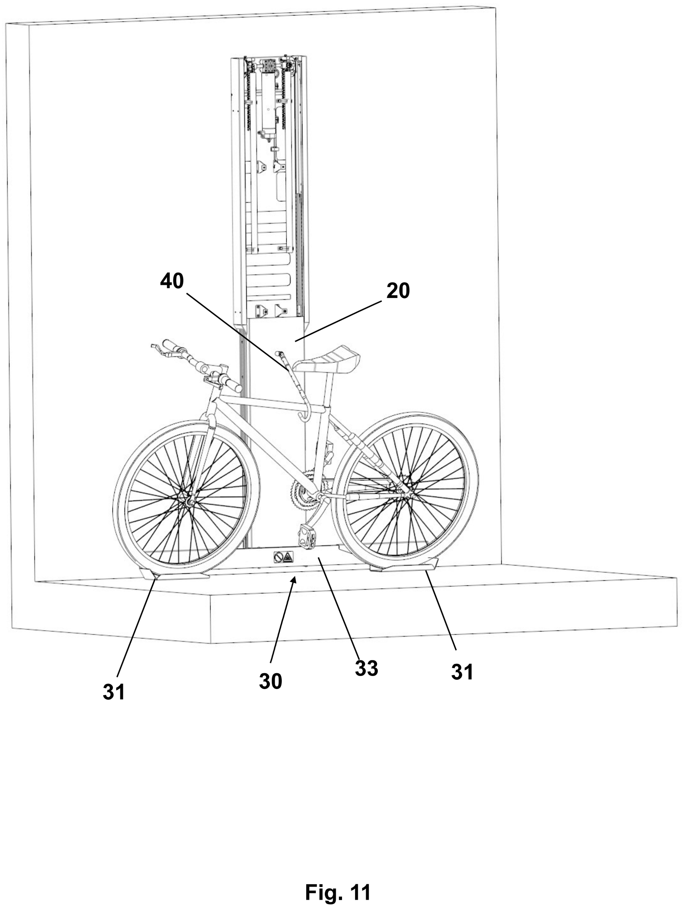

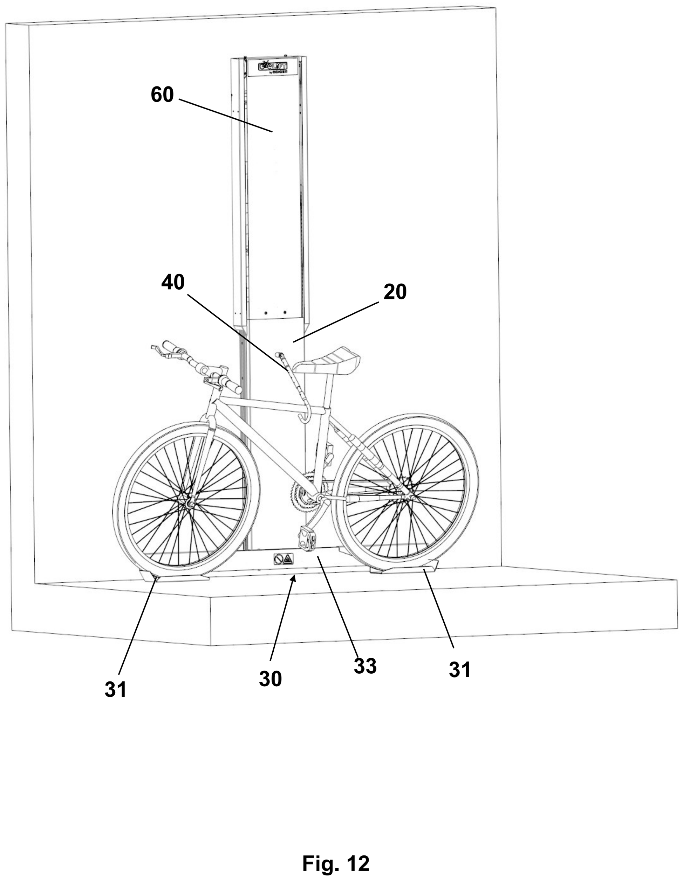

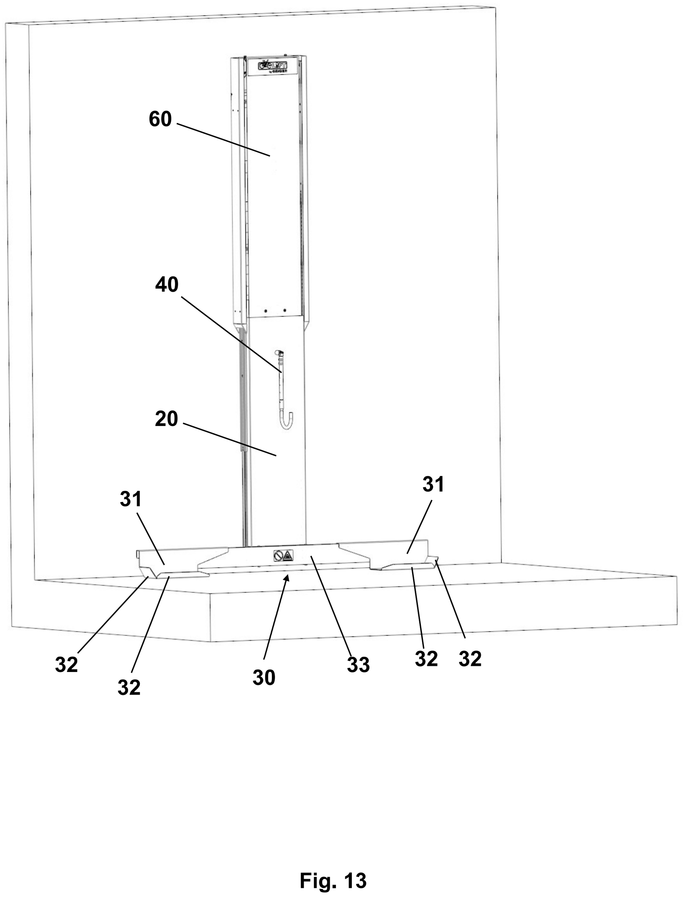

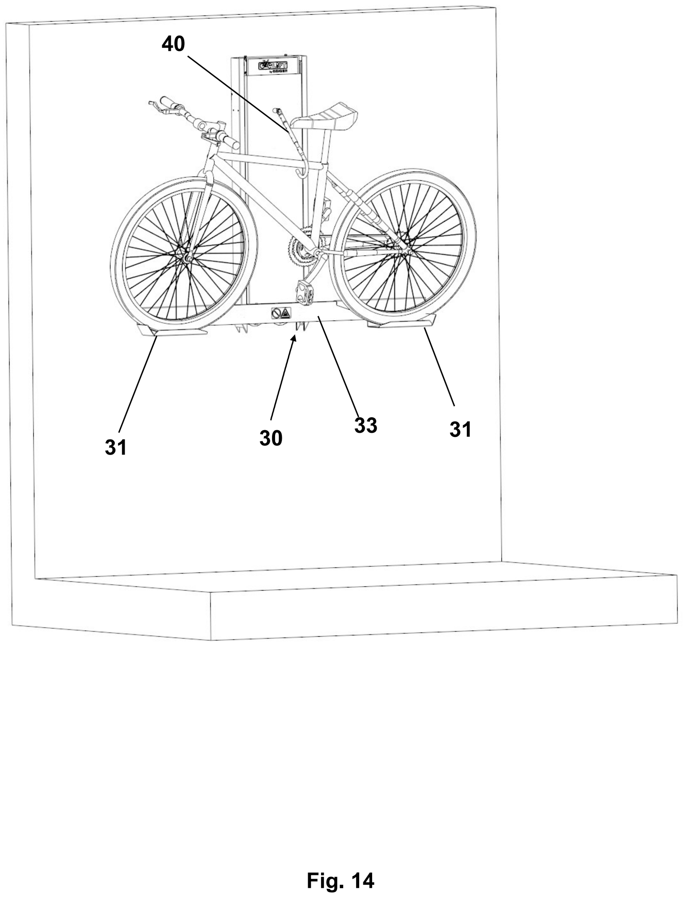

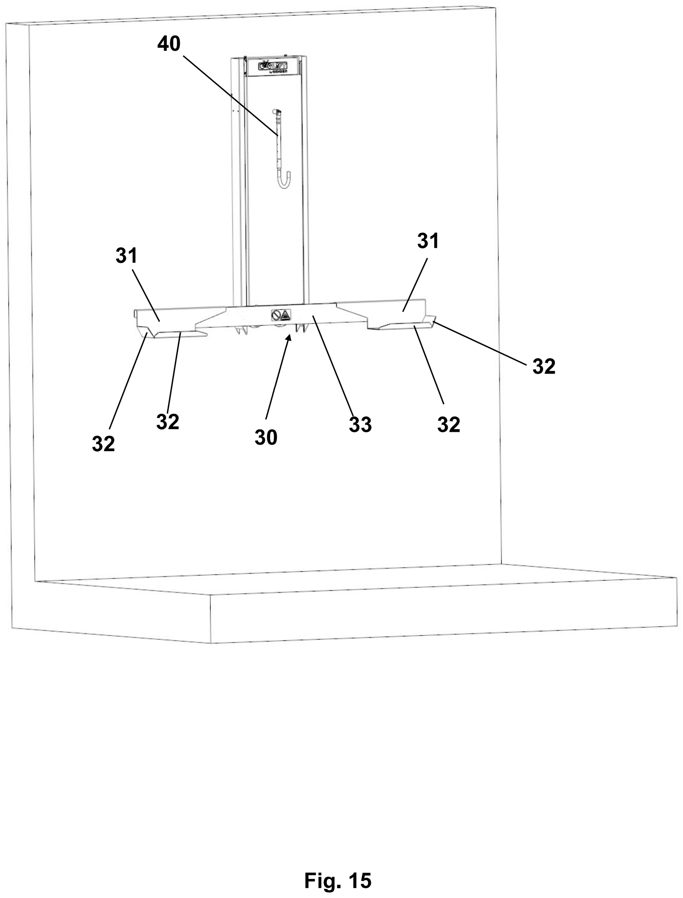

Die vorliegende Erfindung betrifft einen in Fig. 1, Fig. 2, Fig. 3, Fig. 4, Fig. 5, Fig. 6, Fig. 7, Fig. 8, Fig. 9, Fig. 10, Fig. 11, Fig. 12, Fig. 13, Fig. 14, Fig. 15, Fig. 16, Fig. 17, Fig. 18, Fig. 19 ganz oder teilweise dargestellten Fahrradlift zum vertikalen Heben und Parken von Fahrrädern oder ähnlichen Zweirädern. Der Fahrradlift ermöglicht eine platzsparende Aufbewahrung von Fahrrädern in Garagen, Kellern oder anderen Räumlichkeiten mit begrenztem Platzangebot.

Ein Vorteil des Fahrradlifts besteht darin, dass mehrere Fahrräder gleichzeitig aufgenommen und angehoben werden können. Die Konstruktion erlaubt es, mindestens zwei Fahrräder voreinander zu positionieren. Durch eine leichte Neigung der Fahrräder kann der verfügbare Raum optimal ausgenutzt werden.

Die kompakte Bauweise des Fahrradlifts ermöglicht eine flexible Installation an Wänden oder Decken. Im eingefahrenen Zustand nimmt der Lift nur wenig Platz ein, sodass der Bodenbereich darunter frei bleibt. Dies schafft zusätzlichen Stauraum und erleichtert die Reinigung des Bodens.

Der Fahrradlift bietet eine bequeme Möglichkeit, Fahrräder auf einer erhöhten Position zu parken und bei Bedarf wieder abzusenken. Die Bedienung ist einfach und erfordert nur geringen Kraftaufwand, da der Lift so an der Wand angeordnet werden kann, dass er ebenerdig ausfahrbar ist. Durch die vertikale Lagerung werden die Fahrräder zudem vor Beschädigungen geschützt.

Indem ein zum Umgang mit dem Fahrradlift vorgesehenes Fahrrad in einer Position verbleibt, die dem beim normalen Gebrauch eines Fahrrads entspricht, wird ein zusätzlicher Schutz der Fahrräder vor Beschädigungen erreicht. Darüber hinaus wird der Umgang mit dem Fahrradlift erleichtert, da ein zur Aufbewahrung vorgesehenes Fahrrad gebrauchsgemäß über den Boden geschoben und auf die Radablagen (31) der Fahrradhalterung (30) des Fahrradlifts gerollt werden kann. Die Entnahme eines zur Verwendung vorgesehenen Fahrrads vom Fahrradlift gestaltet sich ebenso einfach.

Der Fahrradlift kann einen statischen Teil (60) umfassen, der zur Befestigung an einer Wand oder Decke konfiguriert sein kann. Der statische Teil (60) kann als Hauptstruktur des Fahrradlifts dienen und verschiedene Komponenten aufnehmen.

Wie in den Figuren dargestellt, kann der statische Teil (60) eine vertikale Ausrichtung aufweisen. Der statische Teil (60) kann so gestaltet sein, dass er eine stabile Basis für den beweglichen Teil (20) des Fahrradlifts bildet.

Der statische Teil (60) kann ein Führungssystem für ein Zugmittel umfassen. Dieses Führungssystem kann so konfiguriert sein, dass es das Zugmittel durch den statischen Teil (60) führt, insbesondere ohne dass sich das Zugmittel überkreuzt. Diese Anordnung kann zu einem reibungslosen Betrieb des Fahrradlifts beitragen.

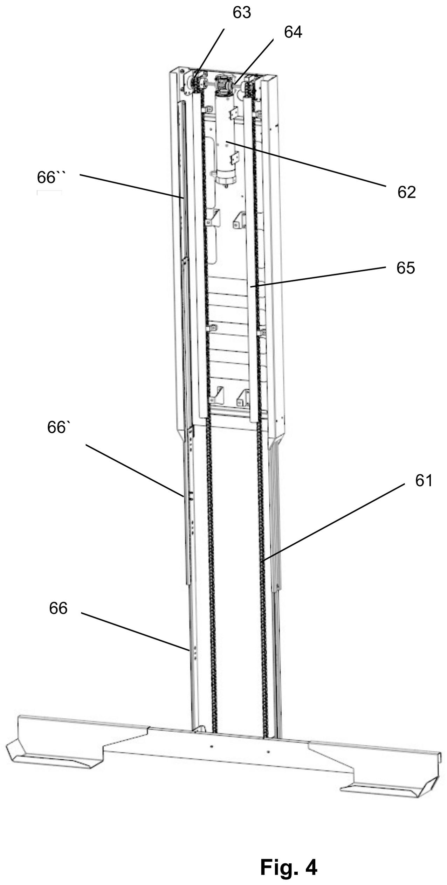

Wie in FIG. 4, 5 und 6 gezeigt, können verschiedene Komponenten des Antriebssystems im statischen Teil (60) untergebracht sein. Dies kann eine kompakte Bauweise des Fahrradlifts ermöglichen.

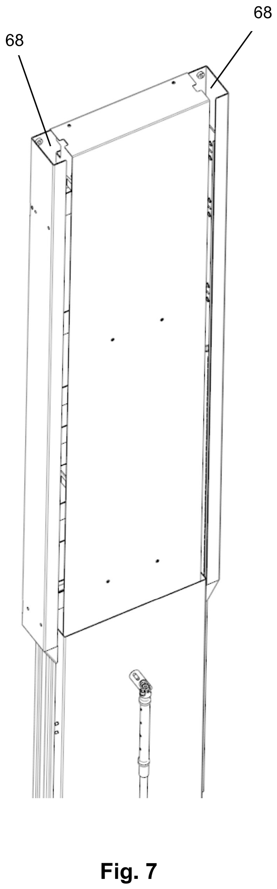

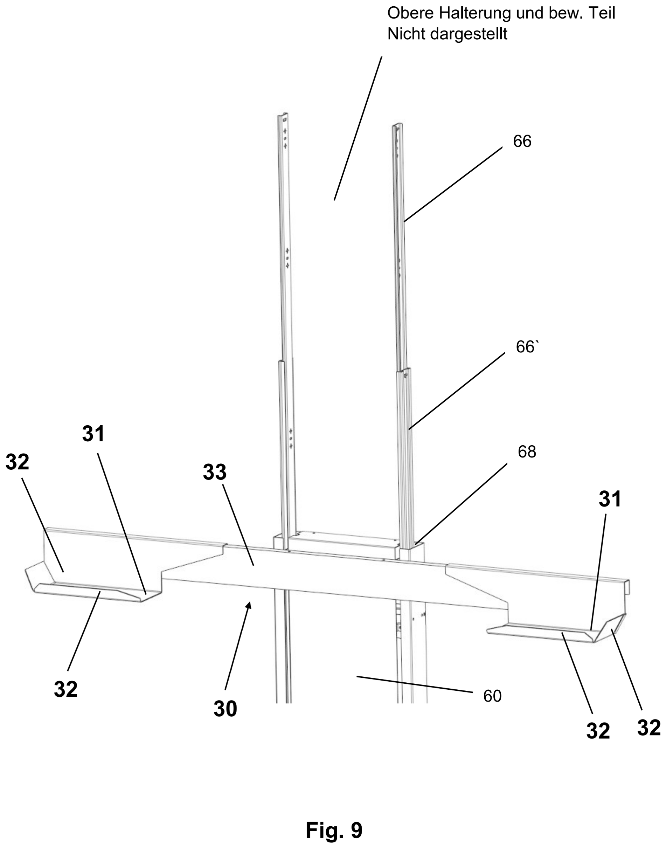

Der statische Teil (60) kann obere Öffnungen (68) für einen teleskopierbaren Auszug aufweisen, wie in FIG. 7 und FIG. 9 dargestellt. Diese oberen Öffnungen (68) können es ermöglichen, dass der teleskopierbare Auszug und demnach der bewegliche teil (20) nach oben aus dem statischen Teil (60) herausgefahren werden kann. Diese Funktion kann die vertikale Reichweite des Fahrradlifts erweitern, was eine besonders hohe maximale Hebehöhe des Systems ermöglicht.

Die Gestaltung des statischen Teils (60) mit der oberen Öffnung (68) kann es ermöglichen, dass der bewegliche Teil (20) des Fahrradlifts über die obere Kante des statischen Teils (60) hinaus verfahren werden kann. Dies kann eine größere Flexibilität bei der Positionierung von Fahrrädern in verschiedenen Höhen bieten.

Der statische Teil (60) kann so konstruiert sein, dass er eine sichere und stabile Befestigung an einer Wand oder Decke ermöglicht. Dies kann dazu beitragen, dass der Fahrradlift auch unter Last sicher und zuverlässig funktioniert.

Der Fahrradlift (10) kann einen beweglichen Teil (20) umfassen, der teleskopisch mit dem statischen Teil (60) verbunden sein kann. Wie beispielsweise in FIG. 1, Fig. 10, Fig. 13 dargestellt, trägt der bewegliche Teil (20) eine Fahrradhalterung (30). Der bewegliche Teil (20) kann einen teleskopierbaren Auszug (66-66") aufweisen, wie in den Figuren gezeigt. Dieser teleskopierbare Auszug (66-66") kann es dem beweglichen Teil (20) ermöglichen, sich vertikal gegenüber dem statischen Teil (60) zu bewegen.

Der bewegliche Teil (20) kann so konfiguriert sein, dass er sich sowohl über eine obere Kante als auch über eine untere Kante des statischen Teils (60) hinaus verlagern kann.

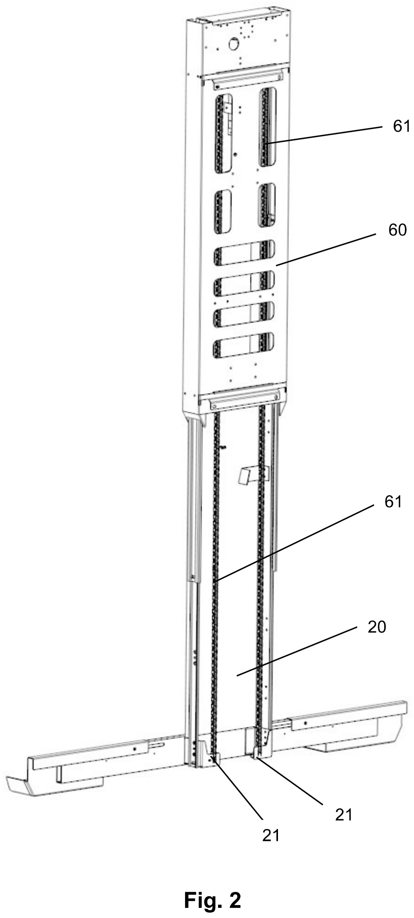

Dies ist beispielhaft in FIG. 9 dargestellt, wo der bewegliche Teil (20) über die obere Öffnung (68) des statischen Teils (60) hinausragt. Die Verlagerung nach unten ist z.B. in FIG. 2, FIG. 3, Fig. 11, Fig. 12, Fig. 13 veranschaulicht.

Wie in FIG. 2 gezeigt, kann der bewegliche Teil (20) mindestens eine Halterung für Zugmittel (21) umfassen. Diese Halterung (21) kann dazu dienen, das Zugmittel (61) fest mit dem beweglichen Teil (20) zu verbinden. Dadurch kann die Zugkraft des Antriebs auf den beweglichen Teil (20) übertragen werden, um eine vertikale Bewegung zu ermöglichen.

Der teleskopierbare Auszug (66-66") des beweglichen Teils (20) kann aus mehreren ineinander verschachtelten Segmenten bestehen, wie in FIG. 4 dargestellt. Diese Konstruktion kann eine kompakte Bauweise im eingefahrenen Zustand ermöglichen, während gleichzeitig ein großer Verfahrweg in vertikaler Richtung realisierbar werden kann.

Die Bewegungsmechanismen des beweglichen Teils (20) können so ausgelegt sein, dass eine stabile und kontrollierte vertikale Bewegung gewährleistet ist. Die parallele Anordnung der teleskopierbaren Auszüge (66-66"), wie z.B. in FIG. 4 gezeigt, kann zu dieser Stabilität beitragen.

FIG. 1, Fig. 11, Fig. 12, Fig. 13, Fig. 14, Fig. 15 zeigt eine perspektivische Vorderansicht eines Fahrradlifts (10). Der Fahrradlift (10) umfasst eine Fahrradhalterung (30), die am beweglichen Teil (20) befestigt sein kann. Die Fahrradhalterung (30) kann verschiedene Komponenten aufweisen, die zur sicheren Befestigung und Positionierung eines Fahrrads beitragen können.

Die Fahrradhalterung (30) umfasst eine Radablage (31), auf der ein Fahrradreifen eines Fahrrads abgestellt werden kann. Die Radablage (31) kann in der Tiefe verstellbar ausgeführt sein, um eine bequemere Nutzung zu ermöglichen.

Weiterhin kann die Fahrradhalterung (30) eine seitliche Radstütze (32) aufweisen. Die seitliche Radstütze (32) kann dazu dienen, das Fahrrad seitlich zu stabilisieren und ein Umkippen oder davonrollen zu verhindern.

Eine horizontale Befestigungsstrebe (33) kann Teil der Fahrradhalterung (30) sein und dessen Komponenten tragen.

Die Fahrradhalterung (30) kann so ausgeführt sein, dass sie an verschiedene Fahrradtypen angepasst werden kann. Dies könnte beispielsweise Tiefeinsteiger oder E-Bikes umfassen.

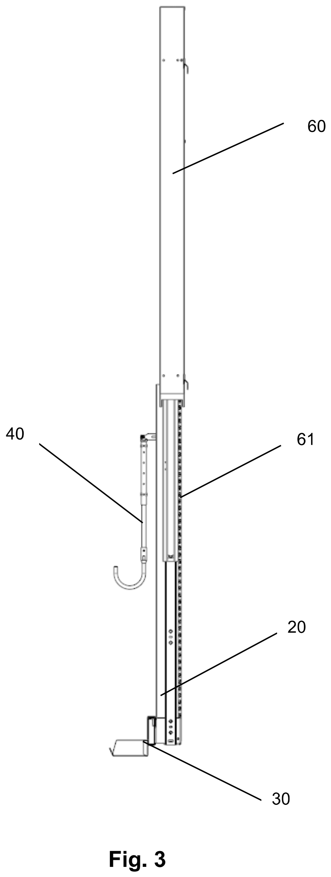

FIG. 3 zeigt eine Seitenansicht des Fahrradlifts (10) mit einem Halteelement (40). Ein in Fig. 1, Fig. 3, Fig. 8, Fig. 11, Fig. 12, Fig. 13, Fig. 14, Fig. 15, Fig. 18, Fig. 19 dargestelltes Halteelement (40) kann am beweglichen Teil (20) angebracht sein und zur zusätzlichen Sicherung eines Fahrrads auf dem Fahrradlift (10), beispielsweise durch einhaken am Fahrradrahmen, dienen.

Das Halteelement (40) kann teleskopierbar und/oder flexibel einstellbar ausgeführt sein, um verschiedene Fahrradtypen aufnehmen zu können. Es kann so gestaltet sein, dass es schnell und einfach ohne Schrauben oder Klemmen angepasst werden kann.

Die Kombination aus Fahrradhalterung (30) und Halteelement (40) kann dazu beitragen, dass Fahrräder sicher und stabil auf dem Fahrradlift (10) positioniert und gehoben werden können.

Das Antriebssystem des Fahrradlifts (10) kann verschiedene Komponenten umfassen, die zusammenwirken, um eine kontrollierte vertikale Bewegung des beweglichen Teils (20) am statischen Teil (60) zu ermöglichen.

Wie in FIG. 4 dargestellt, kann das Antriebssystem ein Zugmittel (61) beinhalten. Das Zugmittel (61) kann beispielsweise als Kette ausgeführt sein. Die losen Enden der Zugmittel (61) können in einem Rohrsystem zur sauberen Aufbewahrung gelagert werden.

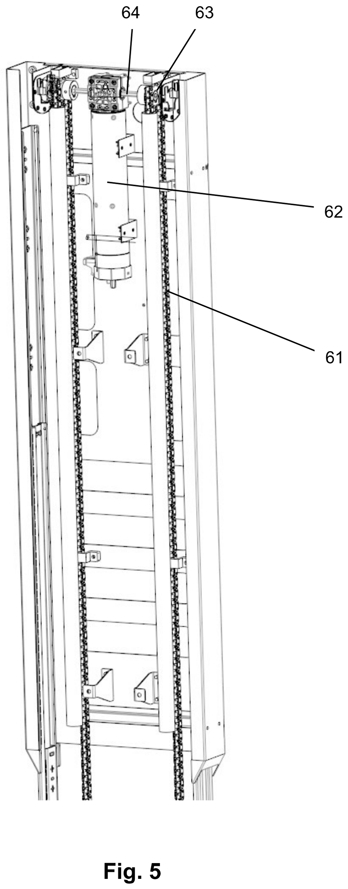

Das Antriebssystem kann weiterhin einen Antrieb (62) umfassen, wie in FIG. 5 gezeigt. Der Antrieb (62) kann als Elektromotor ausgeführt sein. Alternativ könnte der Antrieb (62) auch manuell über eine Handkurbel betätigt werden. Die Handkurbel kann teleskopierbar ausgeführt sein, um Sicherheitsanforderungen der Maschinenrichtlinie zu erfüllen.

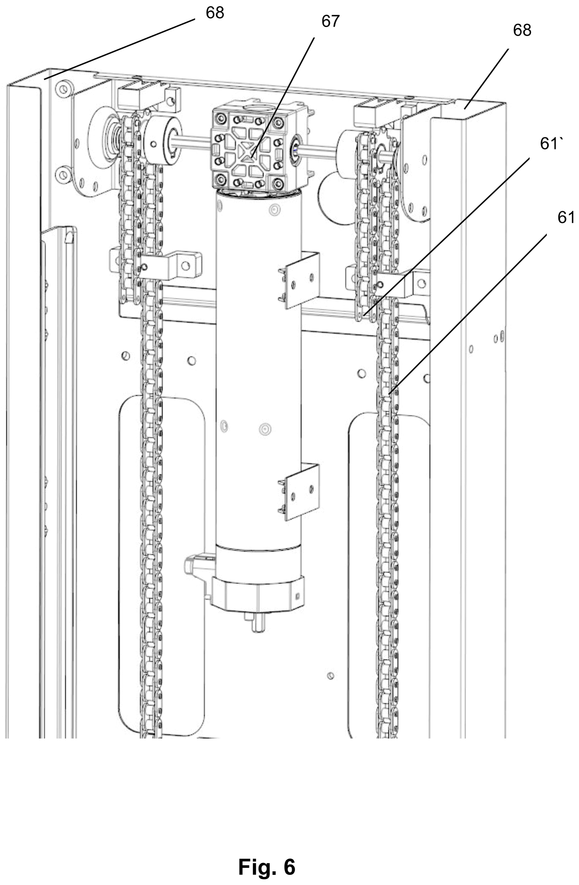

Wie in FIG. 6 dargestellt, kann das Antriebssystem ein Umlenkrad (63) beinhalten. Das Umlenkrad (63) kann, wenn es angetrieben wird, das Zugmittel (61) beweglich verlagern und dadurch eine Verlagerung des beweglichen Teils am statischen Teil vermitteln. Das Umlenkrad kann ein Zahnrad sein.

Ein Übertragungselement (64), wie beispielsweise eine Welle, kann, wie in FIG. 4 gezeigt, das Umlenkrad (63) mit dem Antrieb (62) verbinden. Dies ermöglicht die Kraftübertragung vom Antrieb (62) auf das Umlenkrad (63).

Das Führungssystem für das Zugmittel (61) kann ein Zugmittelführungsrohr (65) umfassen, wie in FIG. 4 dargestellt. Das Zugmittelführungsrohr (65) kann dazu dienen, das Zugmittel (61) durch den statischen Teil (60) zu führen.

Wie in FIG. 6 gezeigt, kann das Antriebssystem weiterhin ein Getriebe (67) beinhalten. Das Getriebe (67) kann dazu dienen, die Drehzahl und das Drehmoment des Antriebs (62) an die Erfordernisse des Fahrradlifts (10) anzupassen.

Die Komponenten des Antriebssystems können so angeordnet sein, dass sie eine effiziente und zuverlässige Bewegung des beweglichen Teils (20) ermöglichen. Das Zusammenspiel von Antrieb (62), Zugmittel (61), Umlenkrad (63), Übertragungselement (64) und Getriebe (67) könnte eine präzise Steuerung der Hubbewegung gewährleisten.

Ein Fahrradlift (10) kann verschiedene Komponenten umfassen, die zusammenwirken, um eine vertikale Bewegung und sichere Lagerung eines Fahrrads zu ermöglichen.

Wie in FIG. 1, Fig. 10, Fig. 11, Fig. 12, Fig. 13, Fig. 14, Fig. 15 dargestellt, kann der Fahrradlift (10) einen beweglichen Teil (20) aufweisen, der mit einer Fahrradhalterung (30) versehen ist. Die Fahrradhalterung (30) umfasst eine Radablage (31), eine seitliche Radstütze (32) und eine horizontale Befestigungsstrebe (33), um ein Fahrrad in Position zu halten. Ein Halteelement (40) am beweglichen Teil (20) kann zusätzliche Stabilität bieten.

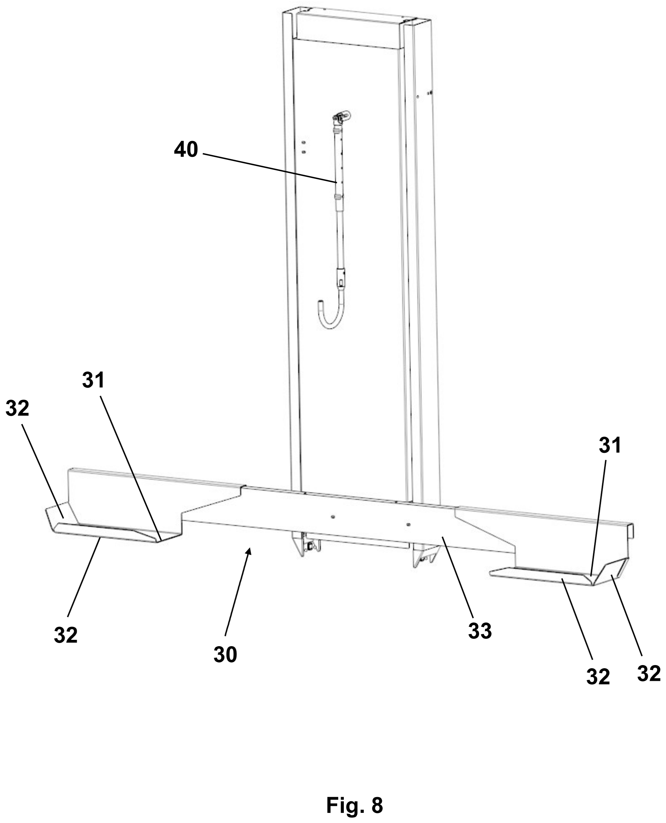

Der bewegliche Teil (20) kann teleskopisch mit einem statischen Teil (60) verbunden sein, wie z.B. in FIG. 1 und FIG. 2 gezeigt. Dies ermöglicht eine kompakte Bauweise im eingefahrenen Zustand (Fig. 8), während gleichzeitig ein großer vertikaler Verfahrweg möglich ist (Fig. 1 und 9). Der statische Teil (60) kann zur Befestigung an einer Wand oder Decke konfiguriert sein.

Ein Antriebssystem kann die vertikale Bewegung des beweglichen Teils (20) ermöglichen. Dieses System kann ein Zugmittel (61) umfassen, das durch ein Führungssystem im statischen Teil (60) geführt wird. Das Führungssystem kann so konfiguriert sein, dass das Zugmittel (61) insbesondere ohne Überkreuzung geführt wird, was zu einem reibungslosen Betrieb beitragen kann.

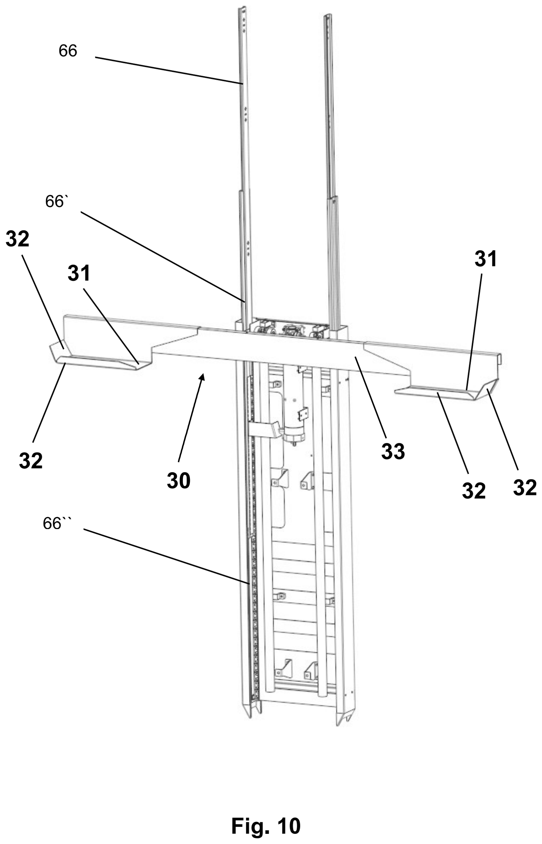

Wie beispielsweise in FIG. 1 und 10 dargestellt, kann der bewegliche Teil (20) einen teleskopierbaren Auszug (66-66") aufweisen. Dieser kann durch eine obere Öffnung (68) im statischen Teil (60) nach oben herausragen, wodurch der Verfahrweg des Fahrradlifts (10) maximiert werden kann. Selbiges gilt für einen Verfahrweg nach unten.

Zur Bedienung des Fahrradlifts (10) kann ein Totmannschalter verwendet werden. Dieser Schalter muss in einem solchen Fall aktiv gedrückt gehalten werden, um eine Bewegung zu ermöglichen. Dies kann eine zusätzliche Sicherheitsmaßnahme darstellen.

Mechanische Endschalter können eingesetzt werden, um zu verhindern, dass der Lift über seine Endposition hinaus fährt. Diese Schalter können dazu beitragen, Beschädigungen am Lift oder am Fahrrad zu vermeiden.

Der Betriebsablauf des Fahrradlifts (10) kann wie folgt aussehen: Zunächst kann der bewegliche Teil (20) in eine niedrige, vorzugsweise bodennahe Position gebracht werden, um das Beladen zu erleichtern. Das Fahrrad kann dann auf die Fahrradhalterung (30) platziert und mit dem Halteelement (40) gesichert werden. Anschließend kann der Benutzer den Totmannschalter betätigen oder eine sonstige Betätigung des Fahrradlifts bewirken, um den beweglichen Teil (20) nach oben zu fahren. Der teleskopierbare Auszug (66-66") kann es ermöglichen, das Fahrrad in eine hohe Lagerposition zu bringen. Die mechanischen Endschalter können sicherstellen, dass der Lift in der gewünschten Position stoppt.

Bevorzugt kann der Antrieb über das Getriebe oder direkt die Zahnräder antreiben, um die Kette zu bewegen an welcher der bewegliche Teil des Fahrradlifts befestigt ist.

Wichtig ist hervorzuheben, dass die Fahrradhalterung (30) des Fahrradlifts mindestens ein Radablagenpaar aus zwei jeweils einem Fahrradreifen, bevorzugt dem Außenumfang, besonders bevorzugt einer Außenumfangpartie jeweils eines Fahrradreifens, zugeordneten Radablagen (31) umfasst.

Jede Radablage bietet eine stabile Auflagefläche für einen Fahrradreifen des auf seinen beiden Rädern stehenden Fahrrads an dessen Außenumfang und erleichtert das sichere Positionieren des Fahrrads auf dem Lift.

Das Radablagenpaar aus zwei jeweils einem Fahrradreifen zugeordneten, horizontalen Radablagen (31) erlaubt ein Fahrrad auf seinen beiden Rädern stehend mit deren momentan dem Boden zugewandten Partie ihres Reifenumfangs auf die Fahrradhalterung zu stellen. Hierzu kann das Fahrrad ohne dass es kraftaufwändig angehoben werden muss einfach geschoben und so auf die horizontalen Radablagen gerollt werden. Ein zum Umgang mit dem Fahrradlift vorgesehenes Fahrrad verbleibt dadurch auch während des Umgangs mit dem Fahrradlift auf seinen beiden Rädern stehend entsprechend einem zur Nutzung vorgesehenem Fahrzustand.

Dies erleichtert nicht nur den Umgang, sondern hierdurch ist darüber hinaus sichergestellt, dass mit dem Anheben des zum Umgang mit dem Fahrradlift vorgesehenen Fahrrads die unterhalb des Fahrrads befindliche Bodenfläche freigegeben wird, weil die vom Fahrrad zu dessen Entfernung von der darunter liegenden Bodenfläche benötigte Wandhöhe lediglich dessen Höhe vom Boden bis zum Lenker beziehungsweise bis zum Sattel entspricht. Im Allgemeinen ist die Wandhöhe beispielsweise in einer Garage mehr als doppelt so hoch, als die Höhe eines stehenden Fahrrads, so dass auf der durch das Anheben freiwerdenden Bodenfläche erneut beispielsweise ein weiteres Fahrrad bequem abgestellt werden kann.

Befindet sich der Fahrradlift in angehobenem Zustand, beispielsweise in einer oberen Endposition, wobei der beweglichen Teil (20) über die obere Kante des statischen Teils (60) verlagert ist, ist der Bereich der darunter befindlichen Bodenfläche frei. Dadurch kann ein weiteres Fahrrad oder andere Dinge auf der so freigewordenen Bodenfläche abgestellt werden. Je nach Anordnung des Fahrradlifts stirn- oder längsseits in einer Garage, kann ein Auto mit der Motorhaube darunter oder seitlich näher an die Wand parkiert werden.

Dies ist beim vorbekannten Stand der Technik, bei dem das Fahrrad eingehängtes Rad über verbleibendem, freiem Rad, beispielsweise Vorderrad über Hinterrad, mit seinen Rädern gegen die Wand stehend angehoben wird, nicht gewährleistet.

Wird nämlich ein Fahrrad wie beim Stand der Technik Vorder- über Hinterrad gegen die Wand abgestützt angehoben, entspricht die benötigte Wandhöhe der Gesamtlänge des Fahrrads. Abgesehen von der enormen Hubhöhe, welche erforderlich wäre, ein zum Umgang mit einem solchen Fahrradlift vorgesehenes Fahrrad so weit anzuheben, dass auf der dann freiwerdenden Bodenfläche ein weiteres Fahrrad abgestellt werden könnte, genügt die Raumhöhe in üblicherweise zum Verstauen von Fahrrädern vorgesehenen Gebäudeteilen nicht, die sich aus benötigter Wandhöhe und der Höhe eines Fahrrads vom Boden bis zum Lenker beziehungsweise bis zum Sattel zusammensetzende notwendige Wandhöhe zur Verfügung zu stellen.

Die Fahrradhalterung (30) kann vorteilhaft je Radablage (31) mindestens eine seitliche Radstütze (32) umfassen. Diese Radstützen (32) können an einem Radablagenpaar beispielsweise beide nach außen oder beide nach innen gewandt ein unbeabsichtigtes seitliches Abrollen eines im Umgang mit dem Fahrradlift befindlichen Fahrrads wirkungsvoll verhindern, da sie vorteilhaft einen Anschlag oder ein zu Hindernis bilden, welches von den auf den Radablagen (31) eines Radablagenpaars aufstehenden Reifen des Fahrrads überwunden werden müssten, bevor es seitlich von den Radablagen herunterfallen könnte.

Darüber hinaus können an den Radablagen (31) vorderseitige Radstützen (32) ausgebildet sein, welche die Reifen eines zum Umgang mit dem Fahrradlift vorgesehenes Fahrrads von einem Abrutschen nach vorn, weg von der Wand hindern.

Die Radablagen (31) können einstückig mit den Radstützen (32) hergestellt sein. Beispielsweise können die Radablagen (31) mit integrierten Radstützen (32) aus durch Falzen geformten Blechen hergestellt sein (Fig. 1).

Die Fahrradhalterung (30) umfasst eine horizontale Befestigungsstrebe (33), an deren distalen Enden einander gegenüberliegend die Radablagen (31) des Radablagenpaars in Bezug auf eine Längserstreckung der Befestigungsstrebe (33) längsverstellbar angeordnet sind.

Die längsverstellbare Anordnung der Radablagen (31) des Radablagenpaars entlang der Längserstreckung der Befestigungsstrebe (33) ist vorteilhaft stufenlos. So können die Radablagen (31) sowohl gemeinsam zum Ausbalancieren des Schwerpunkts eines zum Umgang mit dem Fahrradlift vorgesehenen Fahrrads in Bezug auf die Mitte der horizontalen Befestigungsstrebe (33), als auch unabhängig voneinander zur Anpassung des Achsabstands eines zum Umgang mit dem Fahrradlift vorgesehenen Fahrrads exakt und an beliebigen hierzu erforderlichen Stellen entlang der Längserstreckung der Befestigungsstrebe (33) positioniert werden.

Die horizontale Befestigungsstrebe dient als Aufnahme für die Radablage (31) und als Verbindung zum beweglichen Teil und trägt zu einer gleichmäßigen Lastverteilung bei.

Der Fahrradlift (10) umfasst darüber hinaus ein Halteelement (40) am beweglichen Teil (20), welches zur zusätzlichen Sicherung eines Fahrrads auf dem Fahrradlift ausgebildet ist.

Das Halteelement (40) umfasst einen auf verschiedene Längen einstellbaren und um 360° um eine Längsachse drehbaren Haken. Vorteilhaft umfasst der Haken ein erstes drehbar und schwenkbar am beweglichen Teil (20) angeordnetes Teil (41) mit einer Längsachse und ein gegenüber diesem entlang dessen Längsachse längsverstellbar angeordnetes zweites Teil (42), welches an dessen dem ersten Teil (41) abgewandten Ende hakenförmig zur Hintergreifung einer Rahmenpartie eines zum Umgang mit dem Fahrradlift vorgesehenen Fahrrads ausgebildet ist.

Der durch das Halteelement (40) gebildete oder von diesem ganz oder teilweise umfasste oder das Halteelement (40) ganz oder teilweise umfassende Haken kann auf verschiedene Längen eingestellt werden und um 360° um dessen Längsachse gedreht werden, so dass je nach Fahrrad die geeignete Position zum Einhaken genutzt werden kann. Dies ermöglicht auch das Einhaken von und somit den Umgang des Fahrradlifts mit Tiefeinsteiger-Fahrrädern (z.B. Damen-Fahrrädern).

Der Fahrradlift kann eine Hinderniserkennung umfassen, die den Antrieb stoppt, wenn beispielsweise in Aufwärtsrichtung, wobei ein zum Umgang mit dem Fahrradlift vorgesehenes Fahrrad aufgeräumt und vom Boden angehoben werden soll, ein Hindernis die Aufwärtsbewegung blockiert oder zu blockieren droht, und/oder wenn beispielsweise in Abwärtsrichtung, wobei ein zum Umgang mit dem Fahrradlift vorgesehenes Fahrrad seiner bestimmungsgemäßen Verwendung zugeführt und auf den Boden abgesenkt werden soll, ein Hindernis die Abwärtsbewegung blockiert oder zu blockieren droht.

Die voranstehend beschriebenen Merkmale können kombiniert werden, um Beispiele oder Ausführungsformen zu schaffen, ohne dass die beabsichtigte Wirkung verloren geht. Es versteht sich, dass die Beschreibung einer Ausführungsform oder eines Beispiels nur als Beispiel dient und dass verschiedene Modifikationen durch einen Fachmann vorgenommen werden können. Darüber hinaus wird ein Fachmann erkennen, dass zahlreiche weitere Modifikationen und Kombinationen verschiedener Aspekte möglich sind. Dementsprechend sollen die beschriebenen Aspekte alle derartigen Änderungen, Modifikationen und Variationen umfassen, die in den Umfang der beigefügten Ansprüche fallen.

## Patentansprüche

1. Fahrradlift (10), umfassend:
einen statischen Teil (60), der zur Befestigung an einer Wand oder Decke konfiguriert ist;
einen beweglichen Teil (20), der teleskopisch mit dem statischen Teil (60) verbunden ist;
eine Fahrradhalterung (30), die am beweglichen Teil (20) befestigt ist;
ein Antriebssystem, das umfasst:
mindestens ein Zugmittel (61),
ein Führungssystem für das Zugmittel (61), das konfiguriert ist, das Zugmittel (61) durch den statischen Teil (60) ohne Überkreuzung zu führen;
wobei der bewegliche Teil (20) konfiguriert ist, sich vertikal sowohl über eine obere Kante als auch eine untere Kannte des statischen Teils (60) hinaus zu verlagern,
wobei die Fahrradhalterung (30):
eine horizontale Befestigungsstrebe (33), und
ein an der horizontalen Befestigungsstrebe (33) angeordnetes Radablagenpaar mit zwei jeweils einem Fahrradreifen eines zum Umgang mit dem Fahrradlift auf seinen beiden Rädern stehend vorgesehenen Fahrrads zugeordneten Radablagen (31)
umfasst, und
wobei am beweglichen Teil (20) ein Halteelement (40) zur zusätzlichen Sicherung des Fahrrads auf dem Fahrradlift ausgebildet ist.

2. Fahrradlift (10) nach Anspruch 1, wobei die Radablagen (31) voneinander unabhängig längsverschiebbar an der horizontalen Befestigungsstrebe (33) angeordnet sind.

3. Fahrradlift (10) nach Anspruch 1 oder 2, wobei Fahrradhalterung (30) eine seitliche Radstütze (32) umfasst.

4. Fahrradlift (10) nach Anspruch 1, 2 oder 3, wobei das Zugmittel (61) eine Kette ist.

5. Fahrradlift (10) nach einem der Ansprüche 1 bis 4, wobei das Antriebssystem einen Antrieb (62) umfasst.

6. Fahrradlift (10) nach Anspruch 5, wobei das Antriebssystem weiter ein Umlenkrad (63) umfasst, welches angetrieben die Kette beweglich verlagert.

7. Fahrradlift (10) nach Anspruch 5 oder 6, wobei das Antriebssystem weiter ein Übertragungselement (64) umfasst, welches das Umlenkrad mit dem Antrieb verbindet.

8. Fahrradlift (10) nach einem der Ansprüche 5 bis 7, wobei das Antriebssystem weiter ein Getriebe (67) umfasst.

9. Fahrradlift (10) nach einem der vorhergehenden Ansprüche, wobei das Führungssystem ein Zugmittelführungsrohr (65) umfasst.

10. Fahrradlift (10) nach einem der vorhergehenden Ansprüche, wobei der bewegliche Teil (20) einen teleskopierbaren Auszug (66-66") umfasst.

11. Fahrradlift (10) nach Anspruch 10, wobei der statische Teil (60) eine obere Öffnung (68) für den teleskopierbaren Auszug (66-66") aufweist, durch welchen der Auszug nach oben aus dem statischen Teil heraus verfahrbar ist.

12. Fahrradlift (10) nach einem der vorhergehenden Ansprüche, wobei der bewegliche Teil (20) mindestens eine Halterung für Zugmittel (21) umfasst, über welche das Zugmittel mit dem beweglichen Teil fest und die Zugkraft des Antriebs auf den beweglichen Teil übertragend verbunden ist.
